# EUROPÄISCHE PATENTSCHRIFT

(11) **EP 3 445 520 B1**
(45) Veröffentlichungstag und Bekanntmachung des Hinweises auf die Patenterteilung: **28.08.2019**
(21) Anmeldenummer: 17700063.5
(22) Anmeldetag: 04.01.2017
(51) Int. Cl.: B23K 20/04, C22C 21/00, C22F 1/043

(54) **ALUMINIUMVERBUNDWERKSTOFF MIT KORROSIONSSCHUTZSCHICHT**
ALUMINIUM COMPOUND WITH AN ANTI-CORROSIVE LAYER
MATERIAU COMPOSITE EN ALUMINIUM PRESENTANT UNE COUCHE ANTI-CORROSION

(30) Priorität: 19.04.2016 EP 16166064
(43) Veröffentlichungstag der Anmeldung: 27.02.2019
(73) Patentinhaber: Hydro Aluminium Rolled Products GmbH, 41515 Grevenbroich (DE)
(72) Erfinder: BERMIG, Gerhard, 21640 Horneburg (DE); EIGEN, Nico, 22043 Hamburg (DE); JANSSEN, Hartmut, 40724 Hilden (DE); MROTZEK, Manfred, 21614 Buxtehude (DE); SASS, Volker, 53859 Niederkassel-Mondorf (DE); SCHLÜTER, Stefan, 40545 Düsseldorf (DE)
(74) Vertreter: Cohausz & Florack
(86) Internationale Anmeldenummer: PCT/EP2017/050145
(87) Internationale Veröffentlichungsnummer: WO 2017/182145

(56) Entgegenhaltungen:
- EP-A1- 2 039 790
- EP-A1- 2 090 425

## Beschreibung

Die Erfindung betrifft einen Aluminiumverbundwerkstoff, umfassend mindestens eine Kernschicht aufweisend eine Aluminiumkernlegierung und mindestens eine auf der Kernschicht vorgesehene Korrosionsschutzschicht. Die Erfindung betrifft weiter ein Verfahren zur Herstellung eines Aluminiumverbundwerkstoffs, insbesondere eines erfindungsgemäßen Aluminiumverbundwerkstoffs, bei dem mindestens eine Kernschicht aufweisend eine Aluminiumkernlegierung bereitgestellt wird und mindestens eine Korrosionsschutzschicht einseitig oder beidseitig auf die Kernschicht aufgebracht wird. Weiter betrifft die Erfindung eine Verwendung eines Aluminiumverbundwerkstoffs zur Herstellung eines Wärmetauschers sowie ein Bauteil.

Im Automobilbereich werden Wärmetauscher aus Aluminium bzw. Aluminiumlegierungen eingesetzt. Entsprechende Wärmetauscher sind zumeist Bestandteile der Heiz- und Kühlsysteme in Kraftfahrzeugen. Wärmetauscher für Kraftfahrzeuge werden üblicherweise aus Bändern oder Blechen hergestellt, indem die einzelnen vorgefertigten Komponenten des Wärmetauschers, wie beispielsweise Lamellen, Rohre und Verteiler, durch thermisches Fügen miteinander verbunden werden. Das thermische Fügen wird in den meisten Fällen als Hartlöten unter Schutzgasatmosphäre unter Verwendung von nichtkorrosivem Flussmittel ausgeführt, was als "Controlled Atmosphere Brazing" (CAB) - Prozess bekannt ist.

Zu den verschiedenen Aufgaben solcher thermisch gefügter Wärmetauscher aus Aluminiumwerkstoffen, insbesondere bei Fahrzeugen mit Verbrennungsmotoren, gehören die Kühlung von Kühlwasser oder von Öl, der Einsatz als Ladeluftkühler und die Verwendung in Klimaanlagen. Eine Anforderung beim Betrieb der Wärmetauscher ist ein ausreichender Schutz gegen Korrosion, um eine lange Lebensdauer der Systeme zu gewährleisten.

Ein umfassender Korrosionsschutz ist insbesondere bei Ladeluftkühlern von hoher Bedeutung. Ladeluftkühler kühlen die von einem Turbolader verdichtete Ansaugluft und erhöhen somit den Sauerstoffgehalt der Ladeluft, was zu einer beträchtlichen Leistungssteigerung der Verbrennungsmotoren führt. In modernen Dieselmotoren ist es mittlerweile gängig, der Ansaugluft über eine sogenannte Abgasrückführung in gewissen Lastbereichen definierte Mengen von Verbrennungsgasen beizumischen. Dies senkt die Verbrennungstemperatur und verringert so die unerwünschte Bildung von Stickoxiden im Verbrennungsprozess. Bei der Abgasrückführung wird insbesondere zwischen der Hochdruckabgasrückführung und der Niederdruckabgasrückführung unterschieden. Bei der Niederdruckabgasrückführung werden die Abgase mit relativ niedriger Temperatur hinter einem Dieselpartikelfilter abgezweigt und der angesaugten Frischluft vor dem Turbolader beigemischt. Damit durchläuft das Frischluft-Abgasgemisch auch den Ladeluftkühler und steht in Kontakt zu dessen innerer Oberfläche.

Im Ladeluftkühler kann es damit zur Kondensation von Dampf aus den Abgasen kommen, wobei sich das Kondensat innerhalb des Wärmetauschers sammelt. Das Kondensat kann neben Wasser unterschiedliche Anteile von organischen und/oder anorganischen Säuren enthalten, welche stark korrosiv auf den Aluminiumwerkstoff des Ladeluftkühlers wirken. Dieser Effekt tritt verstärkt bei modernen Ladeluftkühlern mit sogenannter indirekter Kühlung auf, bei denen die Ladeluft über ein flüssiges Kühlmedium gekühlt wird, da hier besonders niedrige Oberflächentemperaturen erreicht werden und somit die Bildung des Kondensats gefördert wird.

Weiter ist ein umfassender Korrosionsschutz insbesondere an Wasserkühlern und luftgekühlten Kondensatoren von großer Bedeutung. Wasserkühler kühlen das Kühlwasser für den Motor und für wassergekühlte Wärmetauscher im Kraftfahrzeug, beispielsweise in Form von Ladeluftkühlern oder Kondensatoren. Luftgekühlte Kondensatoren kühlen und kondensieren ein Kältemittel in einem Kältekreislauf, der in der Regel im Kraftfahrzeug der Klimatisierung der Fahrgastzelle dient. Wasserkühler und luftgekühlte Kondensatoren nutzen während der Fahrt den Fahrtwind und sind deshalb im Kraftfahrzeug so angeordnet, dass sie mit der Umgebungsluft ständig in Berührung kommen können. Daher sind Wasserkühler und luftgekühlte Kondensatoren im Wechsel sowohl trockener als auch feuchter Luft, Regen, salzhaltigen Medien, etc. ausgesetzt. Dies stellt hohe Anforderungen an den Korrosionsschutz und damit an die Korrosionsbeständigkeit des Rohrmaterials der Wasserkühler und luftgekühlten Kondensatoren. Diese Anforderungen werden insbesondere aufgrund des Trends zu geringeren Wandstärken des Rohrmaterials, mit welcher die absolut zulässige Korrosionstiefe im Material immer geringer wird, weiter verschärft.

Aus der oben geschilderten Problematik ergibt sich die Notwendigkeit für besonders korrosionsbeständige Aluminiumwerkstoffe zur Verwendung in Wärmetauschern. Aluminiumverbundwerkstoffe mit einer Kernschicht und optional einer darauf vorgesehenen, äußeren Lotschicht können hinsichtlich der Korrosionsbeständigkeit dadurch verbessert werden, dass auf der Kernschicht bzw. zwischen Kernschicht und der Lotschicht eine Korrosionsschutzschicht bzw. eine Zwischenschicht vorgesehen ist, welche sich durch eine besonders hohe Korrosionsbeständigkeit auszeichnet und gegenüber dem Material der Kernschicht als Opferanode wirkt.

Die EP 0 823 305 A2 beschreibt einen vierschichtigen Aluminiumverbundwerkstoff mit einer zwischen einer äußeren Lotschicht und einer Kernschicht angeordneten Zwischenschicht. Die Zwischenschicht soll hierbei dem Korrosionsschutz dienen und besteht aus einer im Vergleich zum Material der Kernschicht unedleren Legierung. Insbesondere weist die Aluminiumlegierung der Zwischenschicht einen Mn-Gehalt von 0,3 bis 1,5 Gew.-%, einen Mg-Gehalt von 0,05 bis 1,2 Gew.-% sowie einen Zn-Gehalt von 1 bis 5 Gew.-% auf. Die EP 2 090 425 A1 betrifft einen Verbundwerkstoff, wobei ein Trägermaterial, vorzugsweise aus Aluminium oder einer Aluminiumlegierung, mit einer Korrosionsschutzschicht aus einer Aluminiumlegierung beschichtet ist.

Es hat sich herausgestellt, dass bei herkömmlichen Aluminiumverbundwerkstoffen zwar unter korrosiven Bedingungen die Vorgaben hinsichtlich eines maximalen Masseverlusts eingehalten werden können. Bei dem unter Korrosion unvermeidlich stattfindenden Masseverlust können bei den herkömmlichen Aluminiumverbundwerkstoffen jedoch Ablösungen auftreten, deren Größe die maximalen Vorgaben überschreitet. Die Größe der entstehenden Ablösungen kann sich im Betrieb als problematisch für die Lebensdauer und Zuverlässigkeit der Motoren herausstellen.

Der vorliegenden Erfindung liegt daher die Aufgabe zugrunde, einen Aluminiumverbundwerkstoff mit weiter verbesserter Korrosionsbeständigkeit anzugeben, insbesondere zur Vermeidung von groben Ablösungen unter korrosiven Bedingungen. Zudem soll ein Verfahren zur Herstellung eines Aluminiumverbundwerkstoffs, eine Verwendung des Aluminiumverbundwerkstoffs sowie ein Bauteil angegeben werden.

Gemäß einer ersten Lehre wird die oben genannte Erfindung betreffend einen Aluminiumverbundwerkstoff dadurch gelöst, dass die mindestens eine Korrosionsschutzschicht eine Aluminiumlegierung mit folgender Zusammensetzung in Gew.-% aufweist:

| | | | | |
|---|---|---|---|---|
| | | Si | ≤ | 0,10 %, |
| | | Fe | ≤ | 0,6 %, |
| | | Cu | ≤ | 0,2 %, |
| 0,9 % | ≤ | Mn | ≤ | 1,2 %, |
| | | Mg | ≤ | 0,10 %, |
| | | Cr | ≤ | 0,3 %, |
| | | Zn | ≤ | 0,1 %, |
| | | Ti | ≤ | 0,1 %, |

Rest Al und unvermeidbare Verunreinigungen einzeln maximal 0,05 %, in Summe maximal 0,15 %.

Der Aluminiumverbundwerkstoff mit der spezifisch ausgewählten Zusammensetzung der Aluminiumlegierung der Korrosionsschutzschicht zeigt neben einem äußerst geringen Materialverlust unter korrosiven Bedingungen eine deutlich verbesserte Bindungseigenschaft mit der Kernschicht. Dadurch treten auch unter extremen korrosiven Bedingungen bei Einwirkung von sauren oder alkalischen Medien, so wie diese insbesondere bei Ladeluftkühlern, Wasserkühlern oder Kondensatoren auftreten, keine groben Ablösungen des Aluminiumverbundwerkstoffs auf.

Die verbesserten Korrosionsschutzeigenschaften der mindestens einen Korrosionsschutzschicht lassen sich insbesondere auf eine optimierte Gefügestruktur der Korrosionsschutzschicht zurückführen. Relevant ist hierbei insbesondere die Ausbildung der rekristallisierten Kornstruktur im Bauteil nach dem thermischen Fügen, etwa durch einen Hartlötprozess bei typischen Löttemperaturen im Bereich von 590 °C bis 610 °C. Vorteilhaft sind eine möglichst geringe Größe und eine möglichst gleichachsige Kornform. Eigene Untersuchungen haben gezeigt, dass eine stark gestreckte Kornform, wie sie für sogenannte "Longlife"-Wärmetauscherwerkstoffe typisch ist, unter den speziellen korrosiven Bedingungen, wie sie durch Einwirkung korrosiver Kondensate im Inneren von Ladeluftkühlern herrschen, eine ausgeprägte seitliche Ausbreitung des Korrosionsangriffes fördert. Hierdurch besteht die Gefahr, dass sich im Einsatz größere Ablösungen der Korrosionsschutzschicht, einer optional vorgesehenen Lotschicht oder ihrer Korrosionsprodukte bilden. Durch die erfindungsgemäße Ausführung der Korrosionsschutzschicht hinsichtlich Zusammensetzung kann eine günstige feinkörnige Kornstruktur erreicht werden, welche die seitliche Ausbreitung der Korrosion limitiert und so die Bildung größerer Ablösungen im Betrieb vermeidet.

Der Aluminiumverbundwerkstoff kann als Band vorliegen. Verbundwerkstoffe in Form von Bändern werden durch Plattieren hergestellt, insbesondere durch ein Walzplattieren. Mit der Zusammensetzung der Aluminiumlegierung der Korrosionsschutzschicht lassen sich beim Walzplattieren bereits mit geringen Walzkräften hohe Bandqualitäten mit guten Bindungseigenschaften zwischen den Schichten erreichen. Von großer Bedeutung beim Walzplattieren ist die Einstellung des Umformwiderstandes der Korrosionsschutzschicht unter den Walzbedingungen, insbesondere beim Warmwalzen. Als günstig hat sich dabei herausgestellt, wenn der Umformwiderstand der Korrosionsschutzschicht zwischen den Werten des Kernmaterials mit höherer Festigkeit und den Werten einer äußeren Lotschicht mit zusammensetzungsbedingt geringer Warmfestigkeit liegt. Dies gilt besonders für den Fall einer einseitigen Verwendung der Korrosionsschutzschicht. Ist die Festigkeit der Zwischenschicht zu gering, besteht die Gefahr, dass sich die Zwischenschicht beim Beginn des Walzens zu stark längt, was zu Problemen durch eine Biegung des Plattierpaketes sowie zu Prozessunsicherheit durch starke Schwankungen der Plattierschichtdicken führt. Im umgekehrten Fall einer zu hohen Festigkeit der Korrosionsschutzschicht steigen die zum Einbringen einer Verformung in die Korrosionsschutzschicht erforderlichen Walzkräfte stark an und die Entstehung einer festen Bindung zwischen den Schichten des Verbundwerkstoffes wird gehemmt.

Denkbar ist weiter, dass der Aluminiumverbundwerkstoff in Form von Blechen vorliegt, welche beispielsweise aus einem Band abgetrennt werden.

Insbesondere ist die mindestens eine Korrosionsschutzschicht einseitig oder beidseitig auf der Kernschicht aufgebracht.

Der Mangangehalt von 0,9 Gew.-% bis 1,2 Gew.-% der Korrosionsschutzschicht dient zur Einstellung der Festigkeit des Materials durch die verfestigende Wirkung des Mangans durch Mischkristallhärtung sowie des Korrosionspotentials (OCP).

Kupfer trägt ebenfalls zur Festigkeitssteigerung bei. Der Gehalt des Legierungselementes Kupfer in der Legierung der mindestens einen Korrosionsschutzschicht wird jedoch auf 0,2 Gew.-% begrenzt, um eine zu starke Verschiebung des Korrosionspotentials hin zu positiven Werten zu vermeiden.

Silizium neigt in Verbindung mit Mangan zur Bildung feindisperser Ausscheidungsteilchen der sog. Alpha-Phase (Al₁₂Mn₃Si). Diese steigern einerseits die Warmfestigkeit des Werkstoffes und bewirken anderseits im Hartlötprozess die Ausbildung einer grobkörnigen und stark in Walzrichtung gestreckten rekristallisierten Kornstruktur. Beides ist wegen der Herstellbarkeit des Verbundwerkstoffes durch Warmwalzplattieren bzw. wegen der vorteilhaften feinkörnigen Kornstruktur im Endprodukt unerwünscht, weshalb der Gehalt von Silizium in der Legierung der mindestens einen Korrosionsschutzschicht auf 0,1 Gew.-%, vorzugsweise auf 0,05 Gew.-% begrenzt wird.

Magnesium trägt als Legierungselement zur Festigkeitssteigerung bei. Bei einem Lötprozess beeinträchtigt Magnesium jedoch die Lötbarkeit durch eine Reaktion mit dem Flussmittel unter Bildung hochschmelzender Phasen. Der Gehalt an Magnesium in der Legierung der mindestens einen Korrosionsschutzschicht wird deshalb auf 0,1 Gew.-% begrenzt.

Das Legierungselement Eisen ist in Primäraluminium sowie in Aluminiumschrotten enthalten. Ein zu niedriger Eisengehalt würde daher die Produktionskosten unnötig erhöhen. Positiv ist die Eigenschaft des Eisens, grobe intermetallische Ausscheidungsphasen zu bilden, welche bei Rekristallisationsvorgängen als Keimbildner wirken und somit zu einem erwünschten feinkörnigen Gefüge führen. Nachteilig ist dagegen eine Beeinträchtigung des Korrosionsverhaltens bei höheren Gehalten. Der Eisengehalt wird daher in der Legierung der mindestens einen Korrosionsschutzschicht auf höchstens 0,6 Gew.-% beschränkt. Bevorzugt liegt der Eisengehalt bei mindestens 0,20 Gew.-% bis höchstens 0,6 Gew.-%.

Ferner wird die Recyclingfähigkeit des Aluminiumverbundwerkstoffs und der daraus hergestellten Erzeugnisse durch die niedrigen Kupfer-, Silizium- und Zinkanteile sowie durch die Begrenzung des Chrom-Gehalts an der Legierung positiv beeinflusst.

In einer Ausgestaltung des Aluminiumverbundwerkstoffs weist die Korrosionsschutzschicht eine Aluminiumlegierung mit einem Mg-Gehalt von maximal 0,05 Gew.-% auf. Mit einer weiteren Begrenzung des Mg-Gehalts kann die Lötbarkeit des Aluminiumverbundwerkstoffs weiter erhöht werden. Auch wird die Formbarkeit weiter verbessert, was die Bindung zum Kernwerkstoff fördert.

In einer Ausgestaltung des Aluminiumverbundwerkstoffs weist die Korrosionsschutzschicht eine Aluminiumlegierung mit einem Cu-Gehalt von maximal 0,10 Gew.-% auf. Dies kann ebenfalls zu einer verbesserten Formbarkeit des Aluminiumverbundwerkstoffs beitragen sowie die Bildung von Lokalelementen weiter unterbinden.

In einer weiteren Ausgestaltung des Aluminiumverbundwerkstoffs weist die Korrosionsschutzschicht eine Aluminiumlegierung mit einem Cr-Gehalt von maximal 0,10 Gew.-% auf. Hierbei wird das Gefüge der Korrosionsschutzschicht positiv beeinflusst sowie die Bildung von Lokalelementen weiter unterbunden.

In einer weiteren Ausgestaltung des Aluminiumverbundwerkstoffs besteht die Aluminiumkernlegierung aus einer Aluminiumlegierung des Typs AA 3xxx. Vorteilhafte Varianten der AA3xxx-Legierung sind die Typen AA3005, AA3003 oder AA3017. Diese Legierungstypen und darauf basierende Varianten sind für den Einsatz in thermischen Fügeverfahren sowie zur Verwendung in Wärmetauschern besonders geeignet.

Zusätzlich kann der Cu-Gehalt von AA 3xxx-Legierungen, insbesondere der genannten Legierungstypen, auf maximal 0,7 Gew.-% erhöht werden. Mögliche minimale Cu-gehalte der Aluminiumkernlegierung liegen bei mindestens 0,3 Gew.-% oder mindestens 0,4 Gew.-%.

Die Aluminiumkernlegierung kann insbesondere aus einer Aluminiumlegierung mit folgender Zusammensetzung in Gew.-% bestehen:

| | | | | |
|---|---|---|---|---|
| | | Si | ≤ | 0,5 %, |
| | | Fe | ≤ | 0,4 %, |
| | | Cu | ≤ | 0,7 %, |
| 1,0 % | ≤ | Mn | ≤ | 1,5 %, |
| | | Mg | ≤ | 0,3 %, |
| | | Cr | ≤ | 0,3 %, |
| | | Zn | ≤ | 0,1 %, |
| | | Ti | ≤ | 0,25 %, |

Rest Al und unvermeidbare Verunreinigungen einzeln maximal 0,05 %, in Summe maximal 0,15 %.

Die genannten Aluminiumlegierungen weisen aufgrund erhöhter Cu-Gehalte im Vergleich zu gewöhnlichen AA 3xxx-Legierungen verbesserte Festigkeiten bei verbesserter Korrosionsbeständigkeit aufgrund eines erhöhten elektrochemischen Potentials auf. Sie werden bevorzugt ebenfalls für die Herstellung von Teilen von Wärmetauschern eingesetzt. Insbesondere hat sich die Kombination der genannten Aluminiumlegierungen mit erhöhten Cu-Gehalten als vorteilhaft mit der spezifischen Zusammensetzung der für die Korrosionsschutzschicht vorgesehenen Aluminiumlegierung erwiesen, da das Korrosionspotential zwischen den Schichten optimiert und die Bindung im Aluminiumverbundwerkstoff verbessert wird.

Vorzugsweise ist der Aluminiumverbundwerkstoff derart ausgestaltet, dass das Korrosionspotential der Korrosionsschutzschicht mindestens 15 mV, insbesondere 20 mV niedriger als das Korrosionspotential der Kernschicht liegt. In einer Ausführungsform liegt das Korrosionspotential der Korrosionsschutzschicht von 20 mV bis 30 mV oder 20 mV bis 40mV niedriger, besonders bevorzugt 25 mV bis 35 mV niedriger als das Korrosionspotential der Kernschicht. Bei einer Korrosionspotentialdifferenz von weniger als 15 mV besteht das Problem, dass die Wirkung der Korrosionsschutzschicht, einen Korrosionsangriff in Richtung der Ebene der Korrosionsschutzschicht abzulenken und damit die Ausbreitung in der Kernschicht zu verringern, verschlechtert wird. Bei einer zu hohen Potentialdifferenz von mehr als 40 mV besteht das Problem, dass die Korrosionsschutzschicht selbst zu stark angegriffen wird. Zudem besteht die Gefahr, dass bei zu großer Korrosionspotentialdifferenz die Lotschicht edler als die Korrosionsschutzschicht wird und damit das Korrosionsverhalten des Verbundmaterials deutlich verschlechtert wird. Die genannten Korrosionspotential werden in der Regel, wie in den Ausführungsbeispielen gezeigt, gemäß ASTMG69 gegen eine gesättigte Kalomelelektrode ((*Saturated Calomel Electrode,* SCE) gemessen.

In einer weiteren Ausgestaltung des Aluminiumverbundwerkstoffs weist die Aluminiumkernlegierung einen Si-Gehalt von maximal 0,20 Gew.-% auf. Damit wird das Gefüge der Kernschicht positiv beeinflusst.

In einer weiteren Ausgestaltung des Aluminiumverbundwerkstoffs weist die Aluminiumkernlegierung einen Cr-Gehalt von maximal 0,15 Gew.-% auf. Dadurch wird insbesondere die Recyclingfähigkeit des Aluminiumverbundwerkstoffs erhöht.

In einer weiteren Ausgestaltung des Aluminiumverbundwerkstoffs weist die Korrosionsschutzschicht eine Dicke von mindestens 20 µm auf. Dadurch wird ein hinreichender Korrosionsschutz gewährleistet. Beträgt die Dicke der Korrosionsschutzschicht von 30 µm bis 80 µm, wird ein verbesserter Korrosionsschutz bei gleichzeitiger Materialeinsparung erreicht.

Als relative Dicke kommt insbesondere für die Korrosionsschutzschicht eine Dicke von 10 % bis 20 % der gesamten Dicke des Aluminiumverbundwerkstoffs in Frage.

Bei mehreren Korrosionsschutzschichten, etwa einer beidseitigen Ausführung, kann jeweils eine Dicke von 10 % bis 20 % der gesamten Dicke des Aluminiumverbundwerkstoffs verwendet werden.

Der Aluminiumverbundwerkstoff weist vorzugsweise gemäß einer weiteren Ausgestaltung eine mittlere Dicke von 0,1 bis 5 mm und weiter bevorzugt von 0,2 bis 3 mm oder 0,5 mm bis 1,5 mm auf. Mit diesen Dickenbereichen kann ein weites Spektrum an Anwendungen, insbesondere auch im Bereich von Wärmetauschern, abgedeckt werden.

In einer weiteren Ausgestaltung des Aluminiumverbundwerkstoffs ist mindestens eine weitere äußere Schicht vorgesehen. Die mindestens eine weitere äußere Schicht kann dabei eine Lotschicht aus einer Aluminiumlotlegierung umfassen. Die Aluminiumlotlegierung kann den Spezifikationen des Typs AA 4xxx, insbesondere AA 4004, AA 4343 und AA 4045 entsprechen, welche hervorragende Löteigenschaften bei der Verwendung in Wärmetauschern zeigen.

Mit einer Lotschicht kann auf einfache Weise die Bereitstellung des Lots für ein thermisches Fügen mit dem oben beschriebenen Korrosionsschutz verbunden werden. Vorteilhaft für den Korrosionsschutz ist eine Anordnung der Korrosionsschutzschicht zwischen der Kernschicht und der Lotschicht, wobei die Korrosionsschutzschicht insbesondere direkt an der Kernschicht und/oder der Lotschicht anliegt. In einer besonders einfachen Ausgestaltung des Aluminiumverbundwerkstoffs sind drei Schichten vorgesehen, wobei die Korrosionsschutzschicht zwischen der Kernschicht und der Lotschicht angeordnet ist. In einer vierschichtigen Variante ist zusätzlich auf der Seite der Kernschicht, welche von der Korrosionsschutzschicht und der Lotschicht abgewandt ist, eine weitere Korrosionsschutzschicht oder eine weitere Lotschicht vorgesehen. Weiter kann eine fünfschichtige Variante vorgesehen sein, wobei jeweils eine Korrosionsschutzschicht beidseitig auf der Kernschicht und zwischen Kernschicht und jeweils einer äußeren Lotschicht liegt.

Zusätzlich oder alternativ kann mindestens eine weitere Schutzschicht vorgesehen sein. Diese kann aus neben der in Anspruch 1 angegebenen Legierung auch die Legierungen des Typs AA 7xxx, insbesondere AA 7072 und des Typs AA 1xxx, insbesondere AA 1050 aufweisen. Mit einer weiteren Schutzschicht kann die Korrosionsbeständigkeit weiter erhöht werden. Die weitere Schutzschicht ist insbesondere auf der Seite der Kernschicht angeordnet, welche von der Seite, auf welcher die Korrosionsschutzschicht angeordnet ist, abgewandt ist.

Als relative Dicke für die weitere äußere Schicht, insbesondere einer Lotschicht, kann eine Dicke von 5 % bis 10 % der gesamten Dicke des Aluminiumverbundwerkstoffs gegeben sein.

Gemäß einer weiteren Lehre wird die oben genannte Aufgabe betreffend ein Verfahren zur Herstellung eines Aluminiumverbundwerkstoffs, insbesondere eines oben beschriebenen Aluminiumverbundwerkstoffs, bei dem mindestens eine Kernschicht aufweisend eine Aluminiumkernlegierung bereitgestellt wird und mindestens eine Korrosionsschutzschicht einseitig oder beidseitig auf die Kernschicht aufgebracht wird, dadurch gelöst, dass für die Korrosionsschutzschicht eine Aluminiumlegierung mit folgender Zusammensetzung in Gew.-% verwendet wird:

| | | | | |
|---|---|---|---|---|
| | | Si | ≤ | 0,10 %, |
| | | Fe | ≤ | 0,6 %, |
| | | Cu | ≤ | 0,2 %, |
| 0,9 % | ≤ | Mn | ≤ | 1,2 %, |
| | | Mg | ≤ | 0,10 %, |
| | | Cr | ≤ | 0,3 %, |
| | | Zn | ≤ | 0,1 %, |
| | | Ti | ≤ | 0,1 %, |

Rest Al und unvermeidbare Verunreinigungen einzeln maximal 0,05 %, in Summe maximal 0,15 %.

Wie bereits zum Aluminiumverbundwerkstoff ausgeführt, zeigt dieser mit der spezifisch ausgewählten Zusammensetzung der Aluminiumlegierung der Korrosionsschutzschicht neben einem äußerst geringen Materialverlust unter korrosiven Bedingungen eine deutlich verbesserte Herstellbarkeit durch eine optimierte Bindungseigenschaft mit der Kernschicht. Dies ist insbesondere auf die mechanischen Eigenschaften der Legierung der Korrosionsschutzschicht zurückführen, womit sich die Korrosionsschutzschicht besonders prozesssicher auf der Kernschicht aufbringen lässt.

Wird der Aluminiumverbundwerkstoff durch Walzplattieren eines Plattierpakets hergestellt, lassen sich mit der Zusammensetzung der Aluminiumlegierung der Korrosionsschutzschicht hohe Bandqualitäten mit guten Bindungseigenschaften bereits durch geringe Walzkräfte erreichen. Zudem wird dadurch ein in wirtschaftlich großem Maßstab herstellbarer Verbundwerkstoff bereitgestellt. Mit einem Plattierpaket werden mehrere Werkstoffe, hier ein Barren für die Kernschicht sowie mindestens einem Plattierblech für die Korrosionsschutzschicht, aufeinander gebracht. Anschließend werden die Materialien in einem Walzvorgang unter Druck miteinander verbunden.

Weitere Möglichkeiten zur Herstellung des Aluminiumverbundwerkstoffs sind durch ein simultanes Gießen oder die Aufbringung der Korrosionsschutzschicht und ggf. weiterer Schichten durch thermisches Spritzen gegeben. Walzplattieren und simultanes Gießen sind allerdings die derzeit in großem industriellem Umfang genutzten Verfahren zur Herstellung eines Aluminiumverbundwerkstoffs, wobei sich der gegossene Werkstoff durch seine deutlichen Konzentrationsgradienten zwischen den verschiedenen Aluminiumlegierungsschichten von den diskreten Schichtzusammensetzungen des walzplattierten Werkstoffs unterscheiden. Beim Walzplattieren finden nur geringe Diffusionsprozesse zwischen den Schichten statt. Das Verfahren kann, insbesondere bei einem Walzplattieren, weitere Walzstiche umfassen. In einer Ausgestaltung wird der Aluminiumverbundwerkstoff warmgewalzt und optional auf eine Enddicke kaltgewalzt. Hierbei kann optional eine Zwischenglühung des Aluminiumverbundwerkstoffs erfolgen.

In einer Ausgestaltung des Verfahrens wird das Plattierpaket vor dem Walzplattieren auf eine Temperatur von mindestens 450 °C vorgewärmt. Das Plattierpaket wird mit einer entsprechenden Temperatur dem Walzplattiergerüst zugeführt. Damit wird ein Warmwalzen zum Plattieren durchgeführt, womit eine besonders effektive Bindung zwischen den Schichten entsteht. Eine Vorwärmung auf eine Temperatur von 460 °C bis 500 °C optimiert hierbei die Prozesssicherheit des Walzplattierens.

Anschließend kann das warmgewalzte Verbundmaterial durch weiteres Kaltwalzen auf die benötigte Enddicke gebracht werden. Dabei kann optional eine Zwischenglühung durchgeführt werden, um das Material zu entfestigen und die weitere Kaltumformung zu erleichtern.

Der Aluminiumverbundwerkstoff kann abschließend durch ein Glühen in einen bestimmten Zustand gebracht werden, insbesondere um die mechanischen Eigenschaften des Aluminiumverbundwerkstoffs entsprechend der vorgesehenen Verwendung, beispielsweise in einem Wärmetauscher, einzustellen.

Wird bei dem Verfahren der Aluminiumverbundwerkstoff einer Schlussglühung bei einer Materialtemperatur von maximal 350 °C bis 400 °C unterworfen, kann ein weichgeglühter Zustand des Aluminiumverbundwerkstoffs erreicht werden. Insbesondere beträgt hierfür die maximale Haltezeit bei den genannten maximalen Temperaturen von 2 h bis 4 h. Der erreichte Zustand wird als Temper 0 bezeichnet.

Wird der Aluminiumverbundwerkstoff einer Schlussglühung bei einer Materialtemperatur von maximal 250 °C bis 320 °C unterworfen, wird ein rückgeglühter Zustand des Aluminiumverbundwerkstoffs erreicht. Insbesondere beträgt hierfür die maximale Haltezeit bei den entsprechenden maximalen Temperaturen von 2 h bis 4 h. Der erreichte Zustand wird als Temper H24 bezeichnet.

Gemäß einer weiteren Lehre wird die oben genannte Aufgabe über eine Verwendung eines oben beschriebenen Aluminiumverbundwerkstoffs zur Herstellung eines Wärmetauschers oder Bauteilen eines Wärmetauschers gelöst.

Wie bereits einleitend beschrieben, ergeben sich bei Wärmetauschern und deren Bauteilen besondere Anforderungen hinsichtlich des Korrosionsschutzes. Mit dem beschriebenen Aluminiumverbundwerkstoff können diese Anforderungen besonders umfassend erfüllt werden.

In einer Ausgestaltung der Verwendung wird mit dem beschriebenen Aluminiumverbundwerkstoff ein Ladeluftkühler bzw. ein Bauteil eines Ladeluftkühlers, ein Wasserkühler oder luftgekühlter Kondensator hergestellt. Ladeluftkühler unterliegen aufgrund der möglichen Kondensatbildung von korrosionsfördernden Stoffen einem besonders aggressiven Korrosionsangriff, was mit den hervorragenden Eigenschaften des beschriebenen Aluminiumverbundwerkstoffs begegnet werden kann. Besonders vorteilhaft ist die Verwendung zur Herstellung eines Ladeluftkühlers für eine Verwendung in Fahrzeugen mit Niederdruckabgasrückführung, bei denen der angesaugten Verbrennungsluft variable Mengen von Abgasen zugemischt werden. Insbesondere umfasst die Verwendung ein thermisches Fügen, beispielsweise ein Hartlöten in einem CAB-Verfahren, womit eine vorteilhafte Gefügestruktur des Aluminiumverbundwerkstoffs eingestellt wird.

In einer weiteren Ausgestaltung der Verwendung weist der Wärmetauscher Hohlräume auf, insbesondere innerhalb von Rohren, wobei die Korrosionsschutzschicht auf der Innenseite der Hohlräume angeordnet ist. Wie bereits beschrieben, bildet sich insbesondere bei Ladelüftkühlern ein korrosives Kondensat innerhalb der Hohlräume des Wärmetauschers, so dass mit einer entsprechenden Anordnung der Korrosionsschutzschicht der besonders effektive Korrosionsschutz optimal angewandt wird.

Schließlich wird die oben genannte Aufgabe durch ein Bauteil umfassend einen oben beschriebenen Aluminiumverbundwerkstoff gelöst. Umfasst das Bauteil eine thermisch gefügte Konstruktion, wird eine Ausbildung einer vorteilhaften rekristallisierten Kornstruktur im Bauteil nach dem thermischen Fügen gewährleistet. Durch die erfindungsgemäße Ausführung der Korrosionsschutzschicht hinsichtlich Zusammensetzung kann eine günstige feinkörnige Kornstruktur erreicht werden, welche die seitliche Ausbreitung der Korrosion limitiert und so die Bildung größerer Ablösungen im Betrieb vermeidet.

Das Bauteil kann als Wärmetauscher, insbesondere als Ladeluftkühler bzw. als Bauteil eines Ladeluftkühlers, als Wasserkühler oder luftgekühlter Kondensator ausgestaltet sein. Weist der Wärmetauscher Hohlräume auf, insbesondere innerhalb von Rohren, ist die Korrosionsschutzschicht bevorzugt auf der Innenseite der Hohlräume angeordnet.

Hinsichtlich weiterer Ausgestaltungen und Vorteile des Verfahrens, der Verwendung und des Bauteils wird auf die Ausführungen zum Aluminiumverbundwerkstoff verwiesen sowie auf die nachfolgende Beschreibung von Ausführungsbeispielen in Verbindung mit der Zeichnung. In der Zeichnung zeigt
- Fig. 1: ein Ausführungsbeispiel eines Aluminiumverbundwerkstoffs,
- Fig. 2a, b: metallographische Schliffe durch Streifenproben eines Ausführungsbeispiels eines Aluminiumverbundwerkstoffs sowie einer Vergleichsprobe nach sechs Wochen Kondensatkorrosionstest,
- Fig. 3: ein Ausführungsbeispiel eines Verfahrens zur Herstellung eines Aluminiumverbundwerkstoffs und
- Fig. 4: ein Ausführungsbeispiel eines Wärmetauscherbauteils.

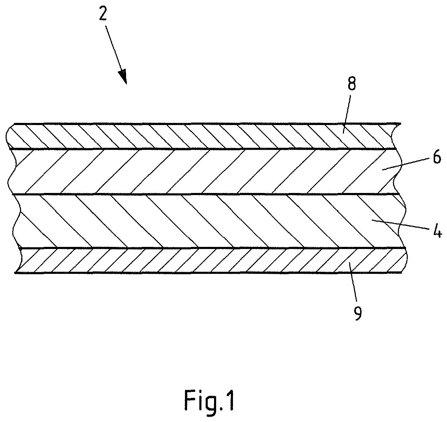

Fig. 1 zeigt ein Ausführungsbeispiel eines Aluminiumverbundwerkstoffs 2 zur Verwendung in der Herstellung von Wärmetauschern. Eine Kernschicht 4 aufweisend eine Aluminiumkernlegierung des Typs AA 3xxx mit einem zusätzlichen maximalen Cu-Gehalt von 0,7 Gew.-% ist vorgesehen. Auf der Kernschicht 4 ist eine Korrosionsschutzschicht 6 aufgebracht, welche eine Aluminiumlegierung mit folgender Zusammensetzung in Gew.-% aufweist:

| | | | | |
|---|---|---|---|---|
| | | Si | ≤ | 0,10 %, |
| | | Fe | ≤ | 0,6 %, |
| | | Cu | ≤ | 0,2 %, |
| 0,9 % | ≤ | Mn | ≤ | 1,2 %, |
| | | Mg | ≤ | 0,10 %, |
| | | Cr | ≤ | 0,3 %, |
| | | Zn | ≤ | 0,1 %, |
| | | Ti | ≤ | 0,1 %, |

Rest Al und unvermeidbare Verunreinigungen einzeln maximal 0,05 %, in Summe maximal 0,15 %. Die Korrosionsschutzschicht 6 weist eine Dicke von 30 µm bis 80 µm auf.

Die dargestellte Korrosionsschutzschicht bevorzugt einen Mg-Gehalt von maximal 0,05 Gew.-%, einen Cu-Gehalt von maximal 0,1 Gew.-% und einen Cr-Gehalt von maximal 0,10 Gew.-%, um verbesserte Eigenschaften bereitzustellen. Zudem ist eine Begrenzung des Si-Gehaltes auf maximal 0,05 Gew.-% möglich, um die Ausbildung von Alpha-Phasen (Al₁₂Mn₃Si) zu verringern.

Eine weitere äußere Schicht ist vorgesehen, welche als Lotschicht 8 ausgestaltet ist und aus einer Aluminiumlotlegierung des Typs AA 4xxx besteht. Zusätzlich ist eine weitere Lotschicht 9 aus einer Aluminiumlotlegierung des Typs AA 4xxx auf der Seite der Kernschicht 2 vorgesehen, welche von der Korrosionsschutzschicht 6 abgewandt ist.

Der Aluminiumverbundwerkstoff 2 liegt als Band vor, welches durch Walzplattieren hergestellt wurde. Aufgrund der spezifischen Zusammensetzung der Aluminiumlegierung der Korrosionsschutzschicht, insbesondere in Verbindung mit der Zusammensetzung der Kernschicht, werden die Bindungseigenschaften der Schichten verbessert, was durch ein Walzplattieren optimal ausgenutzt wird. Im Ergebnis weist der Aluminiumverbundwerkstoff 2 hervorragende Korrosionsbeständigkeit auf.

Zur Analyse der Korrosionsbeständigkeit des Aluminiumverbundwerkstoffs auch unter einer Kondensatbildung korrosiver Medien, wie diese in Ladeluftkühlern entsteht, wurden verschiedene Proben von Aluminiumverbundwerkstoffen einem hierfür entwickelten Kondensatkorrosionstest ausgesetzt.

Drei verschiedene Zusammensetzungen von Aluminiumverbundwerkstoffen wurden getestet. Probe A bestand aus drei Schichten mit einer zwischenliegenden erfindungsgemäßen Legierung für die Korrosionsschutzschicht. Probe B bestand ebenfalls aus drei Schichten, jedoch mit einer zwischenliegenden herkömmlichen Legierung für die Korrosionsschutzschicht. Probe C war als zweischichtiger Verbundwerkstoff mit einer Lotschicht ohne eine Korrosionsschutzschicht ausgestaltet. Die genauen Legierungsbestandteile sind in den Tab. 1a - c festgehalten.

**Tabelle 1 a**

| **Probe A (erfindungsg.)** | Si | Fe | Cu | Mn | Mg | Cr | Zn | Ti |
|---|---|---|---|---|---|---|---|---|
| Kernschicht | 0,04 | 0,17 | 0,44 | 1,14 | 0,22 | 0,08 | <0,01 | 0,01 |
| Korrosionsschutzschicht | 0,04 | 0,48 | 0,06 | 1,06 | 0,01 | <0,01 | <0,01 | 0,01 |
| Lotschicht | 10,0 | 0,09 | 0,00 | 0,00 | 0,00 | <0,01 | <0,01 | 0,01 |

**Tabelle 1 b**

| **Probe B (Vergleich)** | Si | Fe | Cu | Mn | Mg | Cr | Zn | Ti |
|---|---|---|---|---|---|---|---|---|
| Kernschicht | 0,11 | 0,36 | 0,45 | 1,2 | 0,00 | <0,01 | <0,01 | 0,13 |
| Korrosionsschutzschicht | 0,61 | 0,31 | 0,00 | 1,4 | 0,08 | 0,12 | <0,01 | 0,01 |
| Lotschicht | 10,0 | 0,09 | 0,00 | 0,00 | 0,00 | <0,01 | <0,01 | 0,01 |

**Tabelle 1 c**

| **Probe C (Vergleich)** | Si | Fe | Cu | Mn | Mg | Cr | Zn | Ti |
|---|---|---|---|---|---|---|---|---|
| Kernschicht | 0,06 | 0,19 | 0,19 | 1,14 | 0,21 | <0,01 | <0,01 | 0,15 |
| Lotschicht | 10,0 | 0,09 | 0,00 | 0,00 | 0,00 | <0,01 | <0,01 | 0,01 |

Zunächst wurden jeweils drei Walzbarren mit einem Querschnitt von 125 mm x 350 mm mit einer Masse von 60 kg für die Kernschicht, Korrosionsschutzschichten und Lotschichten gegossen. Die Walzbarren für die Lotschichten und die Korrosionsschutzschichten wurden anschließend auf die benötigten Plattierschichtdicken warmgewalzt. Plattierpakete wurden aus jeweils einem Barren für die Kernschicht und den gewalzten Plattierblechen hergestellt. Nach einer Vorwärmung auf 470 °C bei einer Haltezeit von mindestens 3 h wurden die Plattierpakete in mehreren Walzstichen auf eine Dicke von 7 mm ausgewalzt. Über mehrere anschließende Kaltwalzstiche wurde eine Enddicke von 0,40 mm erreicht. Über eine Schlussglühung bei einer Temperatur von 300 °C mit einer Haltezeit von 2 h wurde der rückgeglühte Temper H24 eingestellt. Bei den Proben betrug die Dicke der Lotschicht 7,5 % der gesamten Dicke des Aluminiumverbundwerkstoffs. Die Dicke der Korrosionsschutzschicht betrug 15 % der gesamten Dicke des Aluminiumverbundwerkstoffs.

Zur Prüfung der Korrosionsbeständigkeit gegen aggressive Abgaskondensate wurden Tests in Anlehnung an das VDA Prüfblatt 230-214 durchgeführt. Dabei wurden Probestreifen der Abmessung 30 mm x 120 mm zunächst einer Glühung mit einer Haltezeit von 3 min bei 600 °C unterzogen. Diese Glühung diente zur Einstellung eines Werkstoffzustands, wie dieser im Anwendungsfall nach einem Löten entsteht. Anschließend wurde die Seite der Proben, auf denen keine Korrosionsschutzschicht angeordnet war, mit einem Klebeband abgedeckt. Mit den so vorbereiteten Proben wurde ein zyklischer Test über eine Gesamtdauer von maximal sechs Wochen durchgeführt.

Der Test bestand aus drei aufeinanderfolgenden Phasen:
- Eintauchen der Probe in die Prüflösung bis zur Hälfte der Probenlänge über eine Dauer von 6 h
- Trocknen der Probe an Umgebungsluft für eine Dauer von 2 h
- Auslagern der Probe in der Dampfphase über der Prüflösung für eine Dauer von 16 h

Die Prüflösung wurde auf Basis von Wasser durch Zugabe folgender Stoffe hergestellt:
- Sulfat (Zugabe als Schwefelsäure): 100 mg/l
- Nitrat (Zugabe als Natriumnitrat): 1000 mg/l
- Formiat (Zugabe als Ameisensäure): 650 mg/l
- Acetat (Zugabe als Essigsäure): 500 mg/l
- Chlorid (Zugabe als NaCl): 1000 mg/l

Der pH-Wert der Prüflösung betrug ca. 2,6. Die Prüftemperatur betrug 50°C.

Die Ergebnisse des Massenverlusts bei den Proben in Abhängigkeit der Dauer sind in Tab. 2 angegeben.

**Tabelle 2**

| Massenverlust (g) | 2 Wochen | 4 Wochen | 6 Wochen |
|---|---|---|---|
| **Probe A** (erfindungsgem.) | 0,02 | 0,03 | 0,05 |
| **Probe B** (Vergleich) | 0,04 | 0,06 | 0,08 |
| **Probe C** (Vergleich) | 0,04 | 0,07 | 0,19 |

Die erfindungsgemäße Probe A zeigte hierbei deutlich die beste Korrosionsbeständigkeit mit dem geringsten Massenverlust. Der Massenverlust konnte gegenüber einem Aluminiumverbundmaterial ohne Korrosionsschutzschicht (Probe C) und einem Aluminiumverbundmaterial mit herkömmlicher Korrosionsschutzschicht (Probe B) auch unter aggressiven korrosiven Bedingungen deutlich eingedämmt werden.

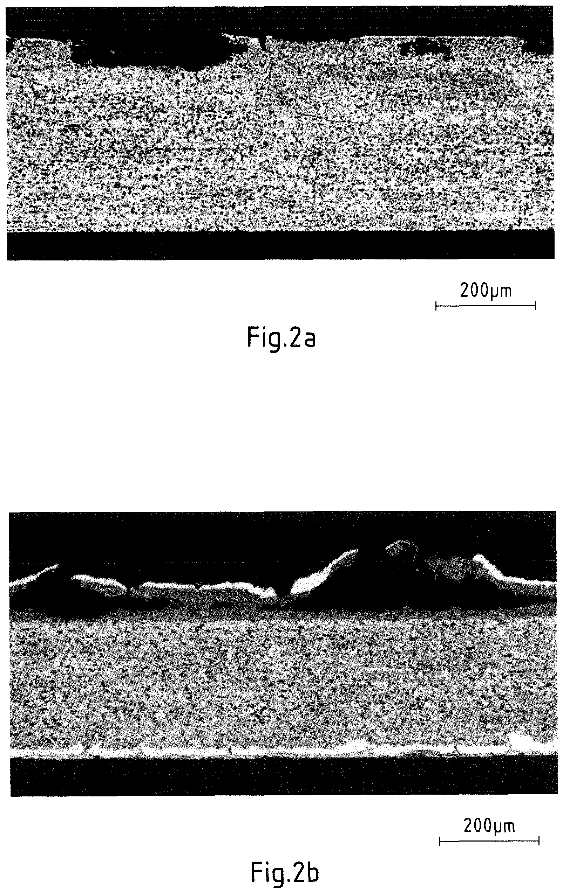

Zusätzlich wurden an Streifenproben nach sechs Wochen Prüfdauer metallographische Untersuchungen in den korrosiv am stärksten angegriffenen Bereichen durchgeführt. Wie in Fig. 2a dargestellt, beschränkt sich die Korrosion bei der erfindungsgemäßen Probe A auf eine lokale Korrosion der Korrosionsschutzschicht, wobei diese auch nicht unterbrochen wird. Eine ausgedehnte laterale Ausbreitung des Korrosionsangriffs wie bei der Vergleichsprobe B in Fig. 2b tritt nicht auf. Daher ist davon auszugehen, dass sich die Größe abgelöster Korrosionspartikel bei Probe A gegenüber Probe B deutlich reduziert.

Weiter wurden die Korrosionspotentiale der in Tab. 1 a -c genannten Materialien untersucht. Die Korrosionspotentiale werden üblicherweise an monolithischen Materialproben mit identischen Legierungszusammensetzungen gemessen, um eine höhere Messgenauigkeit zu erreichen. Gemessen wurde das Korrosionspotential jeweils gemäß der Norm ASTM G69 gegen eine gesättigte Kalomelelektrode (*Saturated Calomel Electrode,* SCE). Die Korrosionspotentiale sind in Tab. 3 aufgeführt.

**Tabelle 3**

| Korrosionspotential | Kernschicht | Korrosionsschutzschicht |
|---|---|---|
| **Probe A** (erfindungsgem.) | -687 mV | -717 mV |
| **Probe B** (Vergleich) | -698 mV | -745 mV |
| **Probe C** (Vergleich) | -699 mV | - |

Das Korrosionspotential der Korrosionsschutzschicht in der erfindungsgemäßen Probe A liegt hierbei in einem bevorzugten Bereich von 20 mV bis 30 mV bzw. 20 mV bis 40 mV, insbesondere 25 mV bis 35 mV niedriger als in der Kernschicht. Die Vergleichsprobe B weist eine deutlich Differenz in den Korrosionspotentialen auf. Die Aluminiumlegierungen der Probe A zeigen im Verbundwerkstoff ein verbessertes Korrosionsverhalten gegenüber dem Vergleichsverbundwerkstoff, welcher Aluminiumlegierungen mit der Zusammensetzung der Probe B aufweist.

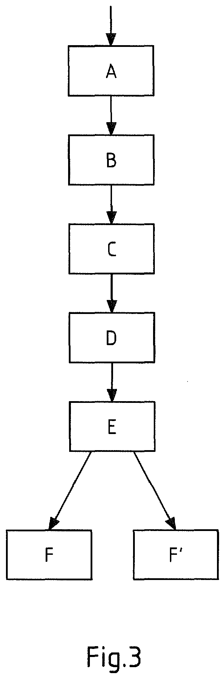

Fig. 3 zeigt ein Ausführungsbeispiel eines Verfahrens zur Herstellung eines Aluminiumverbundwerkstoffs. In Schritt A wird ein Plattierpaket bereitgestellt, wobei mindestens ein Plattierblech auf einem Barren für die Kernschicht mit entsprechenden Zusammensetzungen aufeinander angeordnet wird. In Schritt B wird das Plattierpaket auf eine Temperatur von mindestens 450 °C vorgewärmt, insbesondere auf eine Temperatur von 460 °C bis 500 °C. In Schritt C wird das vorgewärmte Plattierpaket über ein Walzgerüst zu einem Aluminiumverbundwerkstoff in Form eines Bands gewalzt.

Auf das Walzplattieren in Schritt C folgt im optionalen Schritt D mindestens ein zusätzlicher Warmwalzschritt. Die ersten Walzstiche, insbesondere der Walzstich in Schritt C kann so ausgeführt werden, beispielsweise hinsichtlich der Stichabnahme, dass eine optimale Anbindung der Plattierbleche an die Kernschicht erreicht wird. Anschließend wird die Stichabnahme erhöht und das Verbundmaterial wie ein homogenes Material auf eine Warmbandenddicke gewalzt. Mit dem mindestens einen zusätzlichen Warmstich in Schritt D kann dann ein Warmwalzen mit beispielsweise höheren Stichabnahmen als im Schritt C erfolgen, um die Produktivität zu steigern. Schritt C und D können auf dem gleichen Walzgerüst, beispielsweise einem Reversiergerüst, oder auf verschiedenen Walzgerüsten erfolgen.

Mit Schritt C und optional mit dem zusätzlichen Schritt D wird eine Zwischendicke von 2 mm bis 10 mm erreicht. In Schritt E wird ein Kaltwalzen des Aluminiumverbundwerkstoffs auf eine mittlere Dicke von 0,1 bis 5 mm durchgeführt. Dabei kann optional eine Zwischenglühung durchgeführt werden, um das Material zu entfestigen und die weitere Kaltumformung zu erleichtern.

In Schritt F bzw. F' erfolgt eine Schlussglühung des kaltgewalzten Aluminiumverbundwerkstoffs. In Alternative F wird der Aluminiumverbundwerkstoff einer Schlussglühung bei einer Materialtemperatur von maximal 350 °C bis 400 °C bei einer maximalen Haltezeit von 2 h bis 4 h unterworfen, um einen weichgeglühten Zustand mit Temper O zu erreichen. Nach Alternative F' wird der Aluminiumverbundwerkstoff einer Schlussglühung bei einer Materialtemperatur von maximal 250 °C bis 320 °C bei einer maximalen Haltezeit von 2 h bis 4 h unterworfen, um einen rückgeglühten Zustand mit Temper H24 zu erreichen.

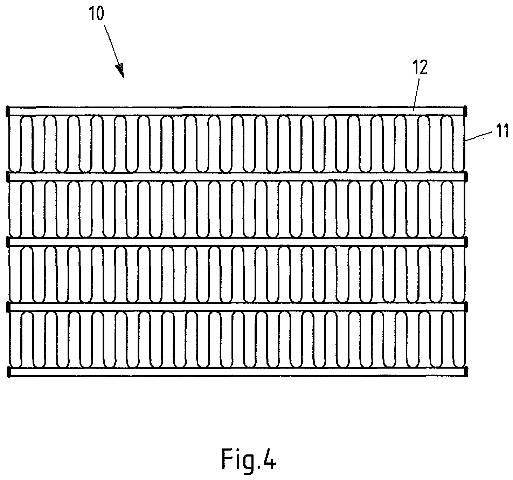

In Fig. 4 ist in einer Draufsicht ein Ausführungsbeispiel eines Wärmetauschers 10 dargestellt. Die Bauteile des Wärmetauschers, beispielsweise die Lamellen 11 des Wärmetauschers 10, bestehen aus einem blanken oder beidseitig mit einem Aluminiumlot beschichteten, oben beschriebenen Aluminiumverbundwerkstoff. Die Lamellen 11 werden mäanderförmig gebogen an Rohre 12 gelötet, so dass eine Vielzahl an Lötverbindungen benötigt wird. Anstatt der Rohre 12 können auch umgeformte Platten verwendet werden, welche Hohlräume zur Führung von Medien ausbilden. Die Rohre 12 können ebenfalls aus dem Aluminiumverbundwerkstoff hergestellt werden, da diese das Medium führen und damit vor Korrosion geschützt sein müssen. Bei dem Einsatz des Wärmetauschers kann sich auf der Oberfläche des Wärmetauschers 10 ein Kondensat aus korrosiven Stoffen bilden, so dass eine Verwendung des erfindungsgemäßen Aluminiumverbundwerkstoffs besonders vorteilhaft ist

Bei einer Ausgestaltung des Wärmetauschers 10 als Ladeluftkühler gibt es insbesondere zwei Ausführungsformen. In der konventionellen Bauart werden die Rohre 12 mit der Ladeluft durchströmt. Die Rohre 12 sind mit äußeren Lamellen 11 verlötet, welche durch den Fahrtwind gekühlt werden. Bei der indirekt gekühlten Bauart werden die Rohre 12 mit der Ladeluft durchströmt und von Kühlflüssigkeit umströmt, wobei eine indirekte Kühlung über die Kühlflüssigkeit bewirkt wird.

In beiden Ausgestaltungen bilden sich die korrosiven Kondensate im Inneren der Rohre 12 bzw. im Inneren der Hohlräume. Die Korrosionsschutzschicht wird daher vorteilhafterweise auf der Ladeluftseite angeordnet, also im Inneren der Rohre 12 bzw. des Ladeluftkühlers.

## Patentansprüche

1. Aluminiumverbundwerkstoff, umfassend
- mindestens eine Kernschicht (4) aufweisend eine Aluminiumkernlegierung und
- mindestens eine auf der Kernschicht (4) vorgesehene Korrosionsschutzschicht (6),
**dadurch gekennzeichnet, dass**
- die mindestens eine Korrosionsschutzschicht (6) eine Aluminiumlegierung mit folgender Zusammensetzung in Gew.-% aufweist:
| | | | | |
|---|---|---|---|---|
| | | Si | ≤ | 0,10 %, |
| | | Fe | ≤ | 0,6 %, |
| | | Cu | ≤ | 0,2 %, |
| 0,9 % | ≤ | Mn | ≤ | 1,2 %, |
| | | Mg | ≤ | 0,10 %, |
| | | Cr | ≤ | 0,3 %, |
| | | Zn | ≤ | 0,1 %, |
| | | Ti | ≤ | 0,1 %, |
Rest Al und unvermeidbare Verunreinigungen einzeln maximal 0,05 %, in Summe maximal 0,15 %.

2. Aluminiumverbundwerkstoff nach Anspruch 1,
**dadurch gekennzeichnet, dass**
die mindestens eine Korrosionsschutzschicht (6) eine Aluminiumlegierung mit einem Mg-Gehalt von maximal 0,05 Gew.-% aufweist.

3. Aluminiumverbundwerkstoff nach Anspruch 1 oder 2,
**dadurch gekennzeichnet, dass**
die mindestens eine Korrosionsschutzschicht (6) eine Aluminiumlegierung mit einem Cu-Gehalt von maximal 0,10 Gew.-% aufweist.

4. Aluminiumverbundwerkstoff nach einem der Ansprüche 1 bis 3,
**dadurch gekennzeichnet, dass**
die mindestens eine Korrosionsschutzschicht (6) eine Aluminiumlegierung mit einem Cr-Gehalt von maximal 0,10 Gew.-% aufweist.

5. Aluminiumverbundwerkstoff nach einem der Ansprüche 1 bis 4,
**dadurch gekennzeichnet, dass**
die Aluminiumkernlegierung aus einer Aluminiumlegierung des Typs AA 3xxx besteht, optional aufweisend einen Cu-Gehalt von maximal 0,7 Gew.-%.

6. Aluminiumverbundwerkstoff nach einem der Ansprüche 1 bis 5,
**dadurch gekennzeichnet, dass**
die Aluminiumkernlegierung aus einer Aluminiumlegierung mit folgender Zusammensetzung in Gew.-% besteht:
| | | | | |
|---|---|---|---|---|
| | | Si | ≤ | 0,5 %, |
| | | Fe | ≤ | 0,4 %, |
| | | Cu | ≤ | 0,7 %, |
| 1,0% | ≤ | Mn | ≤ | 1,5 %, |
| | | Mg | ≤ | 0,3 %, |
| | | Cr | ≤ | 0,3 %, |
| | | Zn | ≤ | 0,1 %, |
| | | Ti | ≤ | 0,25 %, |
Rest Al und unvermeidbare Verunreinigungen einzeln maximal 0,05 %, in Summe maximal 0,15 %.

7. Aluminiumverbundwerkstoff nach einem der Ansprüche 1 bis 6,
**dadurch gekennzeichnet, dass**
das Korrosionspotential der Korrosionsschutzschicht (6) mindestens 15 mV, insbesondere 20 mV, bevorzugt zwischen 20 mV und 40 mV oder 20 mV bis 30 mV oder besonders bevorzugt zwischen 25mV und 35 mV niedriger als das Korrosionspotential der Kernschicht (4) liegt.

8. Aluminiumverbundwerkstoff nach einem der Ansprüche 1 bis 7,
**dadurch gekennzeichnet, dass**
mindestens eine weitere äußere Schicht vorgesehen ist, insbesondere mindestens eine Lotschicht (8) aus einer Aluminiumlotlegierung und/oder mindestens eine weitere Schutzschicht.

9. Verfahren zur Herstellung eines Aluminiumverbundwerkstoffs (2), insbesondere eines Aluminiumverbundwerkstoffs (2) nach einem der Ansprüche 1 bis 8, bei dem
- mindestens eine Kernschicht (4) aufweisend eine Aluminiumkernlegierung bereitgestellt wird und
- mindestens eine Korrosionsschutzschicht (6) einseitig oder beidseitig auf die Kernschicht (4) aufgebracht wird,
**dadurch gekennzeichnet, dass**
- für die mindestens eine Korrosionsschutzschicht (6) eine Aluminiumlegierung mit folgender Zusammensetzung in Gew.-% verwendet wird:
| | | | | |
|---|---|---|---|---|
| | | Si | ≤ | 0,10 %, |
| | | Fe | ≤ | 0,6 %, |
| | | Cu | ≤ | 0,2 %, |
| 0,9 % | ≤ | Mn | ≤ | 1,2 %, |
| | | Mg | ≤ | 0,10 %, |
| | | Cr | ≤ | 0,3 %, |
| | | Zn | ≤ | 0,1 %, |
| | | Ti | ≤ | 0,1 %, |
Rest Al und unvermeidbare Verunreinigungen einzeln maximal 0,05 %, in Summe maximal 0,15 %.

10. Verfahren nach Anspruch 9,
**dadurch gekennzeichnet, dass**
der Aluminiumverbundwerkstoff durch Walzplattieren eines Plattierpakets hergestellt wird.

11. Verfahren nach Anspruch 10,
**dadurch gekennzeichnet, dass**
das Plattierpaket vor dem Walzplattieren auf eine Temperatur von mindestens 450 °C vorgewärmt wird, insbesondere auf eine Temperatur von 460 °C bis 500 °C.

12. Verfahren nach einem der Ansprüche 9 bis 11,
**dadurch gekennzeichnet, dass**
der Aluminiumverbundwerkstoff einer Schlussglühung unterworfen wird.

13. Verwendung eines Aluminiumverbundwerkstoffs (2) nach einem der Ansprüche 1 bis 8 zur Herstellung eines Wärmetauschers (10) oder Bauteilen (11,12) eines Wärmetauschers.

14. Wärmetauscher oder Bauteil eines Wärmetauschers umfassend einen Aluminiumverbundwerkstoff (2) nach einem der Ansprüche 1 bis 8.

15. Wärmetauscher oder Bauteil eines Wärmetauschers nach Anspruch 14,
**dadurch gekennzeichnet, dass**
mindestens eine thermisch gefügte Verbindung von Teilen des Wärmetauschers oder Bauteils vorgesehen ist.

16. Wärmetauscher nach Anspruch 14 oder 15,
**dadurch gekennzeichnet, dass**
der Wärmetauscher als Ladeluftkühler ausgestaltet ist.

## Claims

1. Aluminium composite material, comprising
- at least one core layer (4) having an aluminium core alloy and
- at least one corrosion protection layer (6) arranged on the core layer (4), **characterised in that**
- the at least one corrosion protection layer (6) has an aluminium alloy with the following composition in wt%:
| | | | | |
|---|---|---|---|---|
| | | Si | ≤ | 0.10%, |
| | | Fe | ≤ | 0.6%, |
| | | Cu | ≤ | 0.2%, |
| 0.9% | ≤ | Mn | ≤ | 1.2%, |
| | | Mg | ≤ | 0.10%, |
| | | Cr | ≤ | 0.3%, |
| | | Zn | ≤ | 0.1%, |
| | | Ti | ≤ | 0.1%, |
the rest Al and unavoidable impurities, individually at most 0.05%, in total at most 0.15%.

2. Aluminium composite material according to Claim 1,
**characterised in that**
the at least one corrosion protection layer (6) has an aluminium alloy with an Mg-content of at most 0.05 wt%.

3. Aluminium composite material according to Claim 1 or 2,
**characterised in that**
the at least one corrosion protection layer (6) comprises an aluminium alloy with a Cu content of at most 0.10 wt%.

4. Aluminium composite material according to any one of Claims 1 to 3,
**characterised in that**
the at least one corrosion protection layer (6) comprises an aluminium alloy with a Cr content of at most 0.10 wt%.

5. Aluminium composite material according to any one of Claims 1 to 4,
**characterised in that**
the aluminium core alloy consists of an aluminium alloy of the type AA 3xxx, optionally with a Cu content (6) of at most 0.7 wt%.

6. Aluminium composite material according to any one of Claims 1 to 5,
**characterised in that**
the aluminium core alloy consists of an aluminium alloy with the following composition in wt%:
| | | | | |
|---|---|---|---|---|
| | | Si | ≤ | 0.5%, |
| | | Fe | ≤ | 0.4%, |
| | | Cu | ≤ | 0.7%, |
| 1.0% | ≤ | Mn | ≤ | 1.5%, |
| | | Mg | ≤ | 0.3%, |
| | | Cr | ≤ | 0.3%, |
| | | Zn | ≤ | 0.1%, |
| | | Ti | ≤ | 0.25%, |
the rest Al and unavoidable impurities individually at most 0.05%, in total at most 0.15%.

7. Aluminium composite material according to any one of Claims 1 to 6,
**characterised in that**
the corrosion potential of the corrosion protection layer (6) is at least 15 mV, in particular 20 mV, preferably between 20 mV and 40 mV or 20 mV to 30mV, or more preferably between 25 mV and 35 mV lower than the corrosion potential of the core layer (4).

8. Aluminium composite material according to any one of Claims 1 to 7,
**characterised in that**
at least one further outer layer is provided, in particular at least one brazing layer (8) of an aluminium brazing alloy and/or at least one further protection layer.

9. Method for producing an aluminium composite material (2), in particular an aluminium composite material (2) according to any one of Claims 1 to 8, with which
- at least one core layer (4) comprising an aluminium core alloy is provided and
- at least one corrosion protection layer (6) is applied on one side or both sides of the core layer (4),
**characterised in that**
- for the at least one corrosion protection layer (6) an aluminium alloy with the following composition in wt% is used:
| | | | | |
|---|---|---|---|---|
| | | Si | ≤ | 0.10%, |
| | | Fe | ≤ | 0.6%, |
| | | Cu | ≤ | 0.2%, |
| 0.9% | ≤ | Mn | ≤ | 1.2%, |
| | | Mg | ≤ | 0.10%, |
| | | Cr | ≤ | 0.3%, |
| | | Zn | ≤ | 0.1%, |
| | | Ti | ≤ | 0.1%, |
the rest Al and unavoidable impurities, individually at most 0.05%, in total at most 0.15%.

10. Method according to Claim 9,
**characterised in that**
the aluminium composite material is produced by roll-cladding a plating package.

11. Method according to Claim 10,
**characterised in that**
the plating package, prior to the roll-cladding, is preheated to a temperature of at least 450°C, in particular to a temperature of 460°C to 500°C.

12. Method according to any one of Claims 9 to 11,
**characterised in that**
the aluminium composite material is subjected to a final annealing.

13. Use of an aluminium composite material (2) according to any one of Claims 1 to 8 for the manufacture of a heat exchanger (10) or components (11, 12) of a heat exchanger.

14. Heat exchanger or component of a heat exchanger comprising an aluminium composite material (2) according to any one of Claims 1 to 8.

15. Heat exchanger or component of a heat exchanger according to Claim 14,
**characterised in that**
at least one thermally joined connection of parts of the heat exchanger or component is provided.

16. Heat exchanger according to Claim 14 or 15,
**characterised in that**
the heat exchanger is configured as a charge air cooler.

## Revendications

1. Matériau composite aluminium comprenant
- au moins une couche de noyau (4) comprenant un alliage de noyau en aluminium, et
- au moins une couche de protection contre la corrosion (6) prévue sur la couche de noyau (4),
**caractérisé en ce que**
- la au moins une couche de protection contre la corrosion (6) comprend un alliage d'aluminium ayant la composition suivante en % en poids :
Si ≤ 0,10 %,
Fe ≤0,6 %,
Cu ≤ 0,2 %,
0,9 % ≤ Mn ≤ 1,2 %,
Mg ≤ 0,10 %,
Cr ≤ 0,3 %,
Zn ≤ 0,1 %,
Ti ≤ 0.1 %,
le reste étant constitué d'aluminium et d'impuretés inévitables, pas plus de 0,05 % individuellement, au total pas plus de 0,15 %.

2. Matériau composite aluminium selon la revendication 1,
**caractérisé en ce que**
la au moins une couche de protection contre la corrosion (6) présente un alliage d'aluminium avec une teneur en Mg d'au plus 0,05 % en poids.

3. Matériau composite aluminium selon la revendication 1 ou 2,
**caractérisé en ce que**
la au moins une couche de protection contre la corrosion (6) présente un alliage d'aluminium avec une teneur en Cu d'au plus 0,10 % en poids.

4. Composite aluminium selon l'une quelconque des revendications 1 à 3,
**caractérisé en ce que**
la au moins une couche de protection contre la corrosion (6) présente un alliage d'aluminium avec une teneur en Cr d'au plus 0,10 % en poids.

5. Composite aluminium selon l'une quelconque des revendications 1 à 4,
**caractérisé en ce que**
l'alliage de noyau en aluminium est constitué d'un alliage d'aluminium du type AA 3xxx, présentant éventuellement une teneur en Cu d'au plus 0,7% en poids.

6. Composite aluminium selon l'une quelconque des revendications 1 à 5,
**caractérisé en ce que**
l'alliage de noyau d'aluminium est constitué d'un alliage d'aluminium ayant la composition suivante en % en poids :
Si ≤ 0,5 %,
Fe ≤ 0,4%,
Cu ≤ 0,7 %,
1,0 % ≤ Mn ≤ 1,5 %,
Mg ≤ 0,3 %,
Cr ≤ 0,3 %,
Zn ≤ 0,1 %,
Ti ≤ 0.25 %,
le reste étant constitué d'aluminium et d'impuretés inévitables, pas plus de 0,05 % individuellement, au total pas plus de 0,15 %.

7. Composite aluminium selon l'une quelconque des revendications 1 à 6,
**caractérisé en ce que**
le potentiel de corrosion de la couche de protection contre la corrosion (6) est d'au moins 15 mV, en particulier 20 mV, de préférence entre 20 mV et 40 mV ou entre 20 mV et 30 mV ou de préférence entre 25 mV et 35 mV inférieur au potentiel de corrosion de la couche de noyau (4).

8. Composite aluminium selon l'une quelconque des revendications 1 à 7,
**caractérisé en ce que**
au moins une autre couche extérieure est prévue, en particulier au moins une couche de brasage (8) en alliage d'aluminium et/ou au moins une autre couche de protection.

9. Procédé de fabrication d'un matériau composite aluminium (2), en particulier d'un matériau composite aluminium (2), selon l'une des revendications 1 à 8, selon lequel
- au moins une couche de noyau (4) comprenant un alliage de noyau en aluminium est prévue, et
- au moins une couche de protection contre la corrosion (6) est appliquée sur un côté ou sur les deux côtés de la couche de noyau (4),
**caractérisé en ce que**
- un alliage d'aluminium ayant la composition suivante en % en poids est utilisé pour la au moins une couche de protection contre la corrosion (6) :
Si ≤ 0,10 %,
Fe ≤ 0,6 %,
Cu ≤ 0,2 %,
0,9 % ≤ Mn ≤ 1,2 %,
Mg ≤ 0,10 %,
Cr ≤ 0,3 %,
Zn ≤ 0,1 %,
Ti ≤ 0.1 %,
le reste étant constitué d'aluminium et d'impuretés inévitables, pas plus de 0,05 % individuellement, au total pas plus de 0,15 %.

10. Procédure selon la revendication 9,
**caractérisé en ce que**
le matériau composite aluminium est produit par placage-laminage d'un paquet de placage emballage de revêtement.

11. Procédure selon la revendication 10,
**caractérisé en ce que**
le paquet de placage est préchauffé à une température d'au moins 450 °C avant le laminage, en particulier à une température de 460 °C à 500 °C.

12. Les procédures au titre de l'une quelconque des revendications 9 à 11,
**caractérisé en ce que**
le matériau composite aluminium est soumis à un recuit final.

13. Utilisation d'un matériau composite aluminium (2) selon l'une quelconque des revendications 1 à 8 pour fabriquer un échangeur de chaleur (10) ou des composants (11, 12) d'un échangeur de chaleur.

14. Échangeur de chaleur ou composant d'un échangeur de chaleur comprenant un matériau composite aluminium (2) selon l'une quelconque des revendications 1 à 8.

15. Échangeur de chaleur ou composant d'un échangeur de chaleur selon la revendication 14
**caractérisé en ce que**
il est prévu au moins une liaison assemblée thermiquement entre les parties de l'échangeur de chaleur ou du composant.

16. Échangeur de chaleur selon la revendication 14 ou 15,
**caractérisé en ce que**
l'échangeur de chaleur est conçu comme un refroidisseur d'air de suralimentation.
